Europäisches Patentamt

European Patent Office

Office européen des brevets

(19)

(11) Veröffentlichungsnummer: **0 373 100**
**A1**

(12) **EUROPÄISCHE PATENTANMELDUNG**

(21) Anmeldenummer: **89810784.2**

(22) Anmeldetag: **17.10.89**

(51) Int. Cl.5: **E01F 7/04, D07B 1/18,**
**F16G 11/02, //B21F31/00**

(30) Priorität: **10.11.88 CH 4171/88**

(43) Veröffentlichungstag der Anmeldung:
**13.06.90 Patentblatt 90/24**

(84) Benannte Vertragsstaaten:
**AT CH DE ES FR IT LI**

(71) Anmelder: **FATZER AG**
**Salmsacherstrasse 9**
**CH-8590 Romanshorn(CH)**

(72) Erfinder: **Züst, Roland**
**Amriswilerstrasse 9**
**CH-8590 Romanshorn(CH)**
Erfinder: **Eicher, Bernhard**
**Niederzelg**
**CH-9325 Roggwil(CH)**
Erfinder: **Giezendanner, Peter**
**Widgärtli 5**
**CH-8598 Bottighofen(CH)**

(74) Vertreter: **Bosshard, Ernst**
**Schulhausstrasse 12**
**CH-8002 Zürich(CH)**

(54) **Verfahren zur Herstellung von Stahldrahtseil-Ringen und nach diesem Verfahren hergestellte Ringe.**

(57) Bei der Herstellung von Drahtseil-Ringen (1), insbesondere für Auffangnetze gegen Steinschlag und Schneerutsche, werden die Seilenden durch eine Aluminium Presshülse (2) verbunden. Um die Belastbarkeit der Verbindungen zu erhöhen, wird in der Hülsenbohrung oder an den Seilenden im Bereich der Pressnülse (12) ein reibungserhöhende Belag (3) aufgebracht, der vorzugsweise aus klebstoffgebundenem Quarzsand besteht.

Fig. 1

Fig. 2

EP 0 373 100 A1

## Verfahren zur Herstellung von Stahldraht-Spiralseil-Ringen und nach diesem Verfahren hergestellte Ringe

Die Erfindung bezieht sich auf ein Verfahren zur Herstellung von Stahldraht-Spiralseil-Ringen deren Enden mit Klemmen verbunden werden zur Bildung von Auffangnetzen zur Aufnahme kinetischer Energie, insbesondere gegen Steinschlag und Schneerutsche.

Ferner bezieht sich die Erfindung auf einen nach dem Verfahren hergestellten Stahldraht-Spiralseil-Ring.

Bei der Herstellung von Ringen, die aus einem Stahldrahtseil bestehen, ist es bekannt, die Seil-Enden durch Klemmen oder Presshülsen miteinander zu verbinden. Angestrebt wird eine Verbindung der Seilenden, dass sie möglichst nahe an die Bruchgrenze des Drahtseiles herankommt ohne auszureissen.

Belastungsversuche haben indessen ergeben, dass bei Stahldraht-Spiralseilen auch bei bestmöglicher Verbindung der Seilenden durch Verformung einer einzigen Presshülse, z.B. nach DIN 3093, bestenfalls etwa 35% der Bruchlast des Seiles erreichbar ist. Zahlreiche Versuche mit unterschiedlichen Presshülsen-Formen, unterschiedlichen Aluminium-Werkstoffen und unterschiedlichen Dimensionierungen führten nicht zu einer namhaften Verbesserung. Die Verwendung von zwei und mehr Presshülsen würde bei gleichbleibendem Ringdurchmesser eine Seilverlängerung bedingen, ausserdem ergäbe sich dadurch ein höheres Gewicht und würde einen zusätzlichen Verpressungsaufwand verursachen und die Ringform stören. Ausserdem wird verlangt, dass solche Ringe, die Bestandteil eines Auffangnetzes gegen Steinschlag und Schneerutsche sein können und somit jahrelang der Witterung ausgesetzt sind, durch Rost oder Galvanismus ihre Klemmkraft nicht verlieren.

Die durch die Erfindung zu lösende Aufgabe besteht in der Schaffung einer verbesserten Klemmverbindung mit erhöhter Aussenfestigung mit einer einzigen Aluminium-Presshülse für die Enden eines zu einem Ring geformten Stahldraht-Spiralseiles.

Das Verfahren mit der diese Aufgabe gelöst wird, ist dadurch gekennzeichnet, dass je als Klemme eine Aluminium-Presshülse verwendet wird, in deren Bohrung oder an den Seilenden im Bereich der Presshülse vor der Verpressung ein reibungserhöhender Belag aufgebracht wird.

Der erfindungsgemässe Stahldraht-Spiralseilring ist dadurch gekennzeichnet, dass zwischen der Bohrung der einzigen Presshülse und den beiden Seilendenbereichen ein reibungserhöhender Belag vorhanden ist.

Durch das Anbringen eines reibungserhöhenden Belages entweder an den Seilenden oder vorzugsweise in der Bohrung einer aus einer Aluminium-Knetlegierung bestehenden Presshülse gelingt es, der Verbindung eine Zugfestigkeit zu geben, die gegenüber konventionellen Aluminium-Presshülsen-Verbindungen sprunghaft verbessert ist und sehr nahe an die Bruchlast des Spiraldrahtseiles heranreicht.

Bei Verwendung von Quarzsand als reibungserhöhendem Belag besteht an der Presshülsen-Verbindungsstelle keine Rostgefahr.

In der Zeichnung ist ein Ausführungsbeispiel des Gegenstandes der Erfindung dargestellt.

Es zeigen:

Fig. 1 zwei ineinandergeflochtene Stahldrahtseil-Ringe, deren Enden mit Aluminium-Presshülsen verbunden sind,

Fig. 2 eine in der Bohrung mit reibungserhöhendem Belag versehene Aluminium-Presshülse vor der Verpressung,

Fig. 3 einen Querschnitt durch die Presshülse nach Fig. 2.

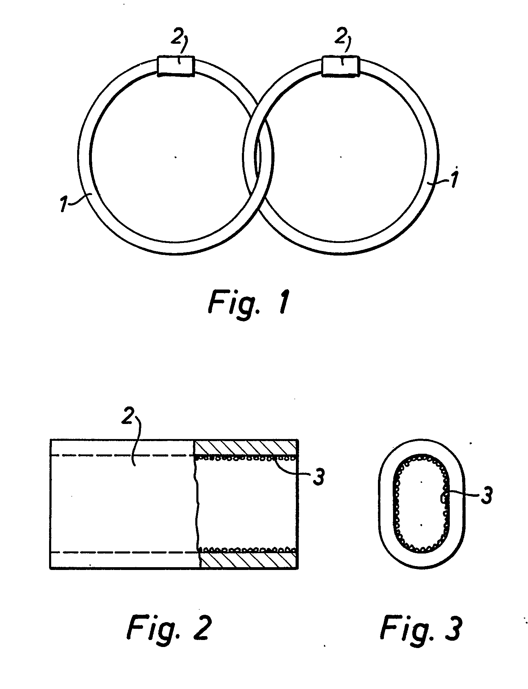

Die Ringe 1 gemäss Fig. 1 bestehen aus einem Spiral-Stahldrahtseil, beispielsweise mit sieben Drähten. Die sich überlappenden Seil-Enden sind je mit einer einzigen aus Aluminium bestehenden Presshülse verbunden. Unter "Aluminium" sollen die für solche Zwecke üblichen Aluminium-Knetlegierungen, z.B. nach DIN .3093, verstanden werden.

Zur Erhöhung der Reibung zwischen den Enden des Seiles und der Aluminium-Presshülse wird die Bohrung der Presshülse 2 vor dem Verpressen mit einem reibungserhöhenden Belag 3, vorzugsweise auf mineralischer Basis versehen.

Als besonders geeignet hat sich Quarzsand herausgestellt, mit einer Körnung von etwa 0,05 mm bis 0,50 mm. Dieser Quarzsand wird mit einem Klebstoff gebunden, der nach dem Aushärten oder Trocknen des Klebstoffes auf der ganzen Innenfläche der Presshülse eine die Innenfläche aufrauhende Schicht bildet. Das Auftragen des reibungserhöhenden Belages kann auf unterschiedliche Weise erfolgen, beispielsweise durch Aufstreichen, Aufspritzen, Tauchen od.dgl. Hernach werden die Seilenden satt in die Presshülsenöffnung eingesetzt und die Presshülse in an sich bekannter Weise durch eine hydraulische Presse mit hohem Druck zu einer angenähert runden, die Seilenden satt umschliessenden Presshülse verpresst. Die Verpressung der Presshülse erfolgt in einem einzigen Arbeitsgang.

Als Alternative könnten die Seilenden statt die Presshülse mit einem reibungserhöhenden Belag, insbesondere mit einer klebstoffgebundenen Quarzsandschicht versehen werden.

## Ansprüche

1. Verfahren zur Herstellung von Stahldraht-Spiralseil-Ringen deren Enden mit Klemmen verbunden werden zur Bildung von Auffangnetzen zur Aufnahme kinetischer Energie, insbesondere gegen Steinschlag und Schneerutsche, dadurch gekennzeichnet, dass je als Klemme eine Aluminium-Presshülse (2) verwendet wird, in deren Bohrung oder an den Seilenden im Bereich der Presshülse vor der Verpressung ein reibungserhöhender Belag (3) aufgebracht wird.

2. Verfahren nach Anspruch 1, dadurch gekennzeichnet, dass als reibungserhöhender Belag (3) mit Klebstoff gebundener Quarzsand verwendet wird.

3. Verfahren nach Anspruch 1 oder 2, dadurch gekennzeichnet, dass die Verpressung der Presshülse (2) in einem einzigen Arbeitsgang erfolgt.

4. Stahldraht-Spiralseil-Ring, hergestellt nach dem Verfahren gemäss Anspruch 1, dadurch gekennzeichnet, dass zwischen der Bohrung der einzigen Presshülse (2) und den beiden Seilendbereichen ein reibungserhöhender Belag (3) vorhanden ist.

5. Stahldraht-Spiralseil-Ring nach Anspruch 4, dadurch gekennzeichnet, dass der reibungserhöhende Belag aus einem mineralischen Material besteht.

6. Stahldraht-Spiralseil-Ring nach Anspruch 4, dadurch gekennzeichnet, dass die Bohrung der Presshülse (2) mit einem klebstoffgebundenen Quarzsandbelag (3) versehen ist.

**Fig. 1**

**Fig. 2**

**Fig. 3**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | CH-A- 511 983 (INDUSTRA INDUSTRIE- UND STRASSENBAU et al.) * Spalte 1, Zeilen 1-3; Spalte 2, Zeilen 8-15; Spalte 3, Zeile 62; Spalte 4, Zeilen 20-23; Spalte 5; Patentanspruch; Unteransprüche 2,3; Figur 4 * | 1-6 | E 01 F 7/04 D 07 B 1/18 F 16 G 11/02 // B 21 F 31/00 |
| | --- | | |
| A | TRAVAUX, Nr. 590, Juli/August 1984, Seiten 75-77; F. GRECH: "Protection de la route du littoral contre les chutes de pierres" * Seite 76, rechte Spalte, Zeilen 15-18,22-27,29,30; Seite 77, linke Spalte, Zeilen 1-5,11-14; untere Figur * | | |
| | --- | | |
| A,P | FR-A-2 622 611 (MECANROC) * Seite 1, Zeilen 1-4; Seite 7, Zeilen 24-28,31-33; Figur 4 * | 1,4-6 | |
| | --- | | **RECHERCHIERTE SACHGEBIETE (Int. Cl.5)** |
| Y | FR-A-1 571 372 (ETABLISSEMENTS DERVAUX) * Seite 1, linke Spalte, Zeilen 1,2,18-31,36-42; Seite 1, rechte Spalte, Zeilen 1,2,29-41; Seite 2, linke Spalte, Zeilen 5-8,14,16,18-20,42-44,49-51,53,54; Seite 2, rechte Spalte, Zeilen 8-12; Figuren 2-4 * | 1-6 | E 01 F B 21 F B 63 G B 65 H B 66 C D 07 B F 16 G F 41 H F 42 D |
| | --- | | |
| A | FR-A-2 133 076 (RAMIREZ ZAMORANO) * Seite 1, Zeilen 1-5,10-19; Seite 4, Zeilen 21-28; Seite 5, Zeilen 34-40; Seite 12, Zeilen 30-40; Seite 13, Zeilen 1-8,13-17; Figuren 1,10,11 * | 1,2,4,6 | |
| | ---            -/- | | |

Der vorliegende Recherchenbericht wurde für alle Patentansprüche erstellt

| Recherchenort | Abschlußdatum der Recherche | Prüfer |
|---|---|---|
| DEN HAAG | 14-02-1990 | SCHUMAN R. |

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-1 952 862  (KARL PFISTERER FABRIK ELEKTROTECHNISCHER SPEZIALARTIKEL) * Seite 1, Zeilen 1-11; Seite 2, Zeilen 14-22; Seite 3, Zeilen 5-9,26; Seite 5, Zeilen 7-10; Figuren 2,10 * --- | 1,2,4-6 | |
| A | DE-A-2 021 458  (GREENING DONALD) * Seite 1, Zeilen 1-4; Seite 2, Zeilen 7-15,27-31; Seite 3, Zeilen 2-12; Seite 4, Zeilen 1-4,10,18-21,24-27; Seite 5, Zeilen 7-10,26-32; Seite 6, Zeilen 1-3,6-19; Seite 7, Zeile 36; Seite 8, Zeilen 1-6,18-21; Seite 8, Zeile 32 - Seite 9, Zeile 17; Seite 11, Zeilen 13-23,29; Seite 13, Zeilen 16-18,21,22; Figuren 1a-2b,5,6 * ----- | 1,4,5 | |
| | | | **RECHERCHIERTE SACHGEBIETE (Int. Cl.5)** |

Der vorliegende Recherchenbericht wurde für alle Patentansprüche erstellt

| Recherchenort | Abschlußdatum der Recherche | Prüfer |
|---|---|---|
| DEN HAAG | 14-02-1990 | SCHUMAN R. |